# EUROPEAN PATENT APPLICATION

(11) **EP 1 671 781 A1**
(43) Date of publication of application: **21.06.2006**
(21) Application number: 05023010.1
(22) Date of filing: 21.10.2005
(51) Int. Cl.: B32B 1/08, F16L 11/04

(54) **Multilayer resin pipe**

(30) Priority: 10.12.2004 JP 2004358240
(71) Applicant: Sanoh Kogyo Kabushiki Kaisha, Koga-shi, Ibaraki 306-0023 (JP)
(72) Inventor: Sato, Masatomi, Koga-shi Ibaraki-ken (JP)
(74) Representative: HOFFMANN EITLE

(57) **Abstract**

A multilayer resin pipe includes a plurality of resin layers respectively made of thermoplastic resins including at least one specific functional resin layer having a high specific property, an adhesive resin layer bonding together the specific functional resin layer and the resin layer adjacent to the specific functional resin layer, and a middle layer interposed between the specific functional resin layer and the resin layer adjacent to the specific functional resin layer and having bond affinity to both the specific functional resin layer and the resin layer adjacent to the specific functional resin layer.

## Description

### BACKGROUND OF THE INVENTION

### Field of the Invention

The present invention relates to a resin pipe for an automotive fuel line and, more particularly, to a multilayer resin pipe including resin layers having improved adhesive property.

### Description of the Related Art

Metal pipes have been generally used as fuel pipes on automobiles. Metal pipes are plated or coated with a resin film to enhance the corrosion resistance and chemical resistance thereof.

Recently, resin pipes have been used instead of metal pipes for fuel lines. Resin pipes have many advantages over metal pipes. Resin pipes are not rusted, can be easily processed, are lightweight and increase the degree of freedom of design.

Polyamide resins are thermoplastic resins prevalently used for making pipes for fuel lines. Polyamide resins are excellent in chemical resistance and heat resistance and are suitable materials for forming pipes for fuel lines.

Recently, three-layer, five-layer and six-layer pipes having improved functional properties have been developed. The multilayer resin pipe includes functional resin layers respectively having enhanced special functions, such as a low-permeability resin layer having a low permeability to fuel, an impact-resistant resin layer having high impact strength and electrically conductive resin layer capable of carrying electric current. Since those functional resin layers of the multilayer resin pipe are made of different kinds of resins, respectively, the adjacent functional resin layers need to be bonded together with an adhesive resin layer having high adhesive property. In a multilayer resin pipe having an outer resin layer made of a polyamide resin, a low-permeability resin layer and an electrically conductive resin layer, the outer resin layer made of a polyamide resin and the low-permeability resin layer are bonded together with an adhesive resin layer so that those resin layers may not separate.

There are many kinds of functional resin layers respectively made of various kinds of resins. Some adhesive resin exhibits a high adhesive property with some resins but exhibits a low adhesive property with some other resins. Thus it is desired to develop an adhesive resin capable of exhibiting a high adhesive property with various resins.

### SUMMARY OF THE INVENTION

Accordingly, it is an object of the present invention to solve the problems in the prior art and to provide a multilayer resin pipe including resin layers including a functional resin layer and an adhesive resin layer capable of bonding the functional resin layer and a resin layer adjacent to the functional resin layer together by high adhesive strength regardless of the bond affinity of the adhesive resin layer to the functional resin layer.

The present invention provides a multilayer resin pipe including: a plurality of resin layers respectively made of thermoplastic resins including at least one specific functional resin layer having a high specific property; an adhesive resin layer bonding together the specific functional resin layer and the resin layer adjacent to the specific functional resin layer; and a middle layer interposed between the specific functional resin layer and the resin layer adjacent to the specific functional resin layer and having bond affinity to both the specific functional resin layer and the resin layer adjacent to the specific functional resin layer.

In the multilayer resin pipe according to the present invention, the resin layer adjacent to the specific functional resin layer may be a functional resin layer.

In the multilayer resin pipe according to the present invention, the resin layer adjacent to the specific functional resin layer may be an outside resin layer.

In the multilayer resin pipe according to the present invention, the specific functional resin layer may be a low-permeability resin layer difficult for fuel to permeate.

In the multilayer resin pipe according to the present invention, the specific functional resin layer may be an impact-resistant resin layer having high impact strength.

In the multilayer resin pipe according to the present invention, the specific functional resin layer may be an electrically conductive resin layer having electrical conductivity.

In the multilayer resin pipe according to the present invention, the middle layer may be made of a thermoplastic resin containing a polyamide resin as a base resin.

In the multilayer resin pipe according to the present invention, the middle layer may be made of polyamide 6, polyamide 11 or polyamide 12.

In the multilayer resin pipe according to the present invention, the middle layer may be made of a copolymer of polyamide 6 and an olefin elastomer.

In the multilayer resin pipe according to the present invention, the middle layer may be made of a thermoplastic resin containing a polypropylene resin or a polyethylene resin as a base resin.

In the multilayer resin pipe according to the present invention, the adhesive resin layer may be made of a thermoplastic resin having amide groups.

In the multilayer resin pipe according to the present invention, the specific functional resin layer may be made of one of resins, having bad bond affinity to the thermoplastic resin having amide groups, including polyphenylene sulfide resins (PPSs), ethylene-vinyl alcohol resins (EvOHs), polybutylene naphthalate resins (PBNs) and ethylene tetrafluoroethylene resins (ETFEs).

The multilayer resin pipe according to the present invention may be intended for use as an automotive fuel pipe.

According to the present invention, the adhesive resin layer is capable of bonding the functional resin layer and the resin layer adjacent to the functional resin layer together by high adhesive strength regardless of the bond affinity of the adhesive resin layer to the functional resin layer.

### BRIEF DESCRIPTION OF THE DRAWINGS

Fig. 1 is a cross-sectional view of a multilayer resin pipe in a first embodiment according to the present invention; and
Fig. 2 is a cross-sectional view of a multilayer resin pipe in a second embodiment according to the present invention.

### DESCRIPTION OF THE PREFERRED EMBODIMENTS

Multilayer resin pipes in preferred embodiments according to the present invention will be described with reference to the accompanying drawings.

### First Embodiment

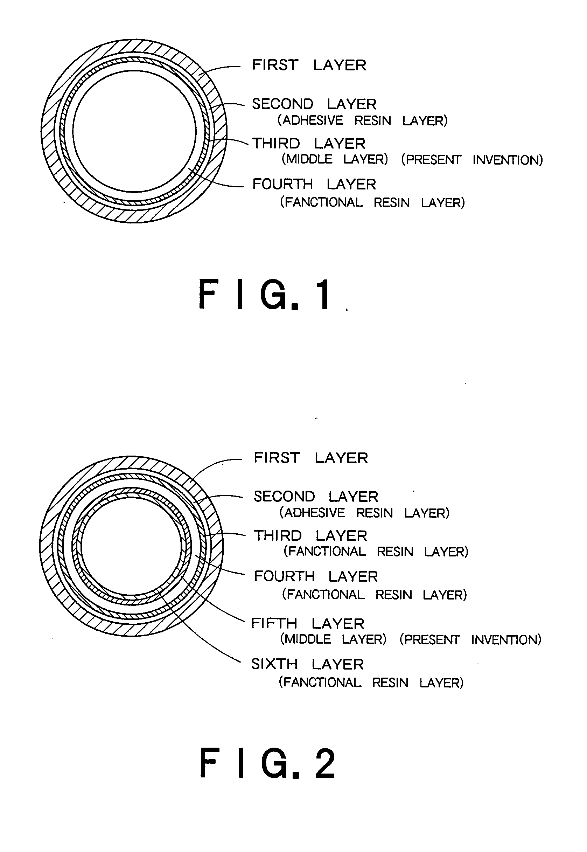

Fig. 1 shows a multilayer resin pipe in a first embodiment according to the present invention in a cross-sectional view. As shown in Fig. 1, the multilayer resin pipe is a four-layer resin pipe having a first layer made of polyamide 11 (PA 11), namely, an outer thermoplastic resin layer, a second layer, namely, an adhesive resin layer, a third layer made f polyamide 11, namely, a middle layer, and a fourth layer made of an ethylene tetrafluoroethylene resin (ETFE), namely, a functional resin layer.

The second layer, namely, an adhesive resin layer, is made of a thermoplastic resin having amide groups, such as PA 11, PA 12 or PA 6. The thermoplastic resin having amide groups, namely, PA 11, PA 12 or PA 6, exhibits high adhesive strength with the first layer made of PA 11, but has bad bond affinity to the fourth layer made of ETFE, namely, the functional resin layer, and has a poor adhesive property with the fourth layer.

The third layer made of PA 11, namely, the middle layer, is interposed between the second layer made of a thermoplastic resin and the fourth layer made of ETFE, namely, the functional resin layer. The third layer made of PA 11 has satisfactory bond affinity to both the second layer, namely, the adhesive resin layer, and the fourth layer, namely, the functional resin layer. Thus the second layer and the fourth layer are bonded satisfactorily together by the third layer made of PA 11.

The polyamide resin as the base resin of the resin forming the third layer, namely, the middle layer, is PA 11, PA 12 or PA 6. When PA 6 is used as the base resin, the resin forming the third layer may contain an olefin elastomer to improve the impact resistance of the multilayer resin pipe. Possible resins other than the polyamide resins include polypropylene resins (PPs) and polyethylene resins (PEs).

### Second Embodiment

Fig. 2 shows a multilayer resin pipe in a second embodiment according to the present invention in a cross-sectional view. As shown in Fig. 2, the multilayer resin pipe is a six-layer resin pipe having a first layer made of PA 12, namely, an outer thermoplastic resin layer, a second layer, namely, an adhesive resin layer, a third layer, namely, a functional resin layer, a fourth layer, namely, an adhesive resin layer, a fifth layer, namely, a middle layer, and a sixth layer, namely, a functional resin layer.

Table 1 shows possible combinations of resins for forming the first to the sixth layers of multilayer resin pipes in Examples 1, 2 and 3.

In the multilayer resin pipe in Example 1, the second and the fourth layer, namely, the adhesive resin layers, are made of a thermoplastic resin having amide groups, such as PA 11, PA 12 or PA 6. This thermoplastic resin, namely, PA 11, PA 12 or PA 6, have good bond affinity to the first layer made of PA 12 and the third layer made of PPS and has bad bond affinity to the sixth layer made of ETFE. The fifth layer made of PA 12 having good affinity to both the fourth and the sixth layer is formed between the fourth and the sixth layer.

In the multilayer resin pipe in Example 2, the fourth layer, namely, the adhesive resin layer, has good bond affinity to EvOH forming the third layer and bad bond affinity to ETFE forming the sixth layer. The fifth layer has good bond affinity to both the fourth and the sixth layer.

Thus, even though the adhesive resin layers are made of the same adhesive resin, the resin for forming the functional layers can be selected from a wide variety of resins regardless of the type of the resin forming the adhesive resin layer.

**... Table 1 ...**

| | Example 1 | Example 2 | Example 3 |
|---|---|---|---|
| First layer | PA12 | PA12 | PA12 |
| Second layer | Adhesive resin | Adhesive resin | Adhesive resin |
| Third layer (Functional resin layer) | PPS | EvOH | PBN |
| Fourth layer | Adhesive resin | Adhesive resin | Adhesive resin |
| Fifth layer (Middle layer) | PA12 | PA12 | PA11 |
| Sixth layer (Functional resin layer) | ETFE | ETFE | ETFE |

## Claims

1. A multilayer resin pipe comprising:
a plurality of resin layers respectively made of thermoplastic resins including at least one specific functional resin layer having a high specific property;
an adhesive resin layer bonding together the specific functional resin layer and the resin layer adjacent to the specific functional resin layer; and
a middle layer interposed between the specific functional resin layer and the resin layer adjacent to the specific functional resin layer and having bond affinity to both the specific functional resin layer and the resin layer adjacent to the specific functional resin layer.

2. The multilayer resin pipe according to claim 1, wherein the resin layer adjacent to the specific functional resin layer is a functional resin layer.

3. The multilayer resin pipe according to claim 1, wherein the resin layer adjacent to the specific functional resin layer is an outside resin layer.

4. The multilayer resin pipe according to claim 1, wherein the specific functional resin layer is a low-permeability resin layer difficult for fuel to permeate.

5. The multilayer resin pipe according to claim 1, wherein the specific functional resin layer is an impact-resistant resin layer having high impact strength.

6. The multilayer resin pipe according to claim 1, wherein the specific functional resin layer is an electrically conductive resin layer having electrical conductivity.

7. The multilayer resin pipe according to claim 1, wherein the middle layer is made of a thermoplastic resin containing a polyamide resin as a base resin.

8. The multilayer resin pipe according to claim 7, wherein the middle layer is made of polyamide 6, polyamide 11 or polyamide 12.

9. The multilayer resin pipe according to claim 7, wherein the middle layer is made of a copolymer of polyamide 6 and an olefin elastomer.

10. The multilayer resin pipe according to claim 1, wherein the middle layer is made of a thermoplastic resin containing a polypropylene resin or a polyethylene resin as a base resin.

11. The multilayer resin pipe according to claim 1, wherein the adhesive resin layer is made of a thermoplastic resin having amide groups.

12. The multilayer resin pipe according to claim 1, wherein the specific functional resin layer is made of one of resins, having bad bond affinity to the thermoplastic resin having amide groups, including polyphenylene sulfide resins, ethylene-vinyl alcohol resins, polybutylene naphthalate resins and ethylene tetrafluoroethylene resins.

13. The multilayer resin pipe according to claim 1 intended for use as an automotive fuel pipe.
